# FASCICULE DE BREVET EUROPEEN

(11) **EP 0 777 065 B1**
(45) Date de publication et mention de la délivrance du brevet: **10.04.2002**
(21) Numéro de dépôt: 96402185.1
(22) Date de dépôt: 14.10.1996
(51) Int. Cl.: F16F 9/08, F16F 9/43

(54) **Sphère, notamment pneumatique, par exemple pour suspension hydropneumatique de véhicule automobile**
Kugel, insbesondere eine pneumatische Kugel, zum Beispiel für die hydropneumatische Aufhängung eines Kraftfahrzeuges
Sphere, especially a pneumatic sphere, for example for the hydropneumatic suspension of a motorvehicle

(30) Priorité: 30.11.1995 FR 9514180
(43) Date de publication de la demande: 04.06.1997
(73) Titulaire: AUTOMOBILES PEUGEOT, 75116 Paris (FR); AUTOMOBILES CITROEN, 92200 Neuilly-sur-Seine (FR)
(72) Inventeur: Lamorlette, Bruno, 78800 Houilles (FR); Tranzer, Alain, 92290 Chatenay Malabry (FR)
(74) Mandataire: Bentz, Jean-Paul

(56) Documents cités:
- EP-A- 0 095 552
- EP-A- 0 124 414
- EP-A- 0 435 834
- DE-A- 2 018 183
- DE-B- 1 206 666
- FR-A- 1 265 241
- FR-A- 1 562 181
- GB-A- 1 084 367
- US-A- 3 788 627
- US-A- 4 049 251
- US-A- 4 092 017

## Description

La présente invention concerne une sphère notamment pneumatique pour une suspension hydropneumatique de véhicule automobile par exemple.

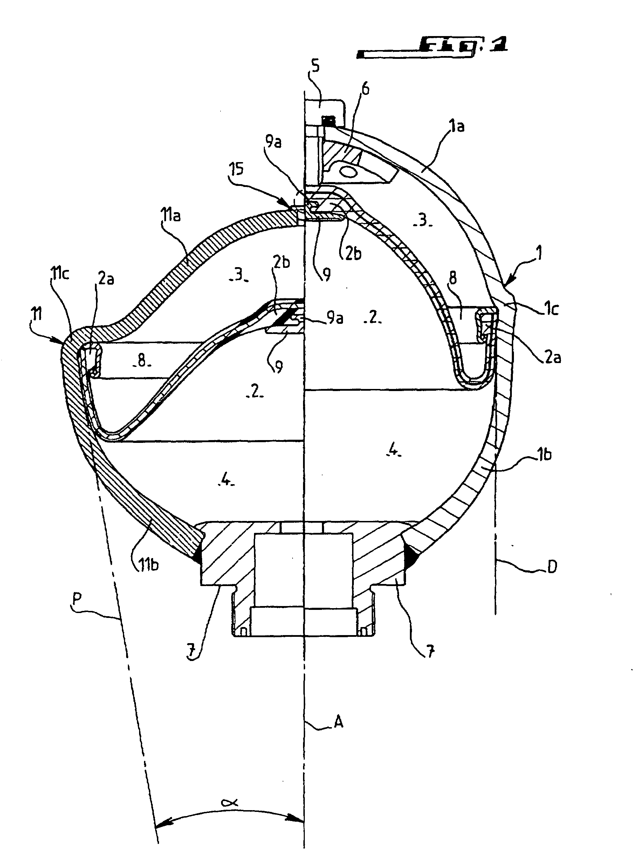

On a représenté schématiquement sur la figure 1 des dessins annexés en coupe axiale sur la demi-vue droite une sphère hydropneumatique connue.

Cette sphère connue comporte une enveloppe externe rigide 1 par exemple métallique, ayant une partie supérieure la et une partie inférieure 1b reliées ensemble par soudage ou formées monobloc, et une membrane souple déformable 2 fixée à l'intérieur de ladite enveloppe au niveau de la zone de jonction 1c entre lesdites parties supérieure et inférieure de manière à définir une chambre supérieure 3 renfermant par exemple un gaz et une chambre inférieure 4 destinée à recevoir par exemple un liquide.

La chambre supérieure 3 est destinée à contenir un gaz sous pression qui est injecté à travers une vis de gonflage 5 traversant le sommet de l'enveloppe 1 et venant se visser dans une pièce de retenue 6 en forme de calotte sphérique logée à l'intérieur de la partie supérieure la de l'enveloppe 1.

La chambre inférieure 4 communique par l'intermédiaire d'un embout de raccordement 7 avec par exemple un circuit hydraulique (non représenté).

La membrane 2 est déplaçable à l'intérieur de l'enveloppe 1 entre une position basse extrême dans laquelle elle est en contact avec l'embout de raccordement 7 et une position haute extrême dans laquelle elle vient en contact avec la vis de gonflage 5.

La membrane 2 a en position basse extrême une forme générale hémisphérique dont le bord périphérique équatorial 2a présente un renflement radialement saillant vers l'intérieur que vient saisir une collerette circulaire 8 au niveau de la zone de jonction précitée 1c pour y attacher la membrane.

La membrane 2 est attachée à la collerette 8 de telle sorte qu'en position basse elle s'étende localement à partir de la zone de jonction 1c dans une direction D parallèle à l'axe A de la sphère.

La membrane 2 est plus épaisse dans sa zone centrale 2b dans laquelle est noyé un téton de fixation 9a solidaire d'une plaque en forme de disque 9 qui est fixée sous ladite zone centrale rigidifiée et destinée à venir en contact avec l'embout de raccordement 7 en position basse extrême.

Une telle sphère est déjà utilisée pour remplacer le ressort d'une suspension de type Mac Pherson, le liquide d'actionnement du vérin de suspension étant en communication de fluide avec la partie inférieure de ladite sphère, de sorte que lorsque la caisse du véhicule s'abaisse le liquide soit refoulé dans ladite chambre inférieure 4 venant comprimer le gaz enfermé dans la chambre supérieure 3 de l'autre côté de la membrane 2, la détente du gaz ainsi comprimé assurant le retour du liquide dans le circuit hydraulique de la suspension lors du débattement des roues du véhicule.

Toutefois, dans ce type de sphère, la membrane est soumise à de fortes sollicitations mécaniques au cours de son déplacement entre ses positions basse et haute et subit des contraintes en traction répétées, de sorte que la membrane peut se fissurer progressivement et perdre son étanchéité, et il est nécessaire de regonfler périodiquement la chambre supérieure de la sphère.

En outre, lors du passage d'une position basse à une position haute, la courbure de la membrane varie dans de très larges proportions, provoquant un phénomène dit de cloquage.

On voit en outre sur la figure 1, qu'en position haute extrême de la membrane 2, un important volume mort subsiste dans la chambre supérieure 3.

L'invention a donc pour but d'éviter les inconvénients précités et de proposer une sphère notamment pneumatique pour une suspension hydropneumatique de véhicule automobile par exemple, permettant de diminuer les contraintes en traction dans la membrane et de réduire le phénomène de cloquage dans cette dernière.

A cet effet, la présente invention a pour objet une sphère définie par la revendication 1.

Selon l'invention, l'enveloppe comporte des moyens pour que la membrane, en position haute extrême, présente sur toute sa longueur une courbure qui coïncide sensiblement avec celle de la surface interne de la partie supérieure de l'enveloppe pour réduire au maximum le volume mort et donc minimiser les contraintes en traction dans la membrane.

Avantageusement, la forme générale aplatie de l'enveloppe se caractérise par le rapport entre son diamètre interne au niveau de la zone de jonction des parties supérieure et inférieure et sa hauteur interne, lequel rapport est compris entre 1,35 et 1,65 et égal de préférence à environ 1,5.

Selon un autre mode de réalisation de l'invention, le rapport entre la hauteur interne de l'enveloppe et la hauteur interne de sa partie supérieure est compris entre 2,25 et 2,75 et égal de préférence à environ 2,5.

Dans un premier mode de réalisation des moyens précités, ces moyens sont constitués par la paroi même de la partie supérieure de l'enveloppe qui présente au voisinage de la zone de jonction précitée une courbure opposée à celle du sommet de la sphère pour éliminer le volume mort dans ladite chambre supérieure notamment au-dessus de la zone de fixation de la membrane sur l'enveloppe.

On peut également prévoir que la longueur développée de la membrane soit égale ou légèrement supérieure à celle de la surface interne de la partie inférieure de l'enveloppe pour éviter que la membrane travaille en traction en position basse extrême.

Selon encore un autre mode de réalisation de l'invention, le plan tangent à la surface interne de la partie inférieure de l'enveloppe au voisinage de sa zone de jonction avec la partie supérieure forme un angle avec l'axe de la sphère compris entre 5 et 8°, et égal de préférence à environ 7°.

Ces deux dernières caractéristiques contribuent à ce que la membrane vienne reposer sur la partie inférieure interne de l'enveloppe sans être sollicitée en traction, lorsqu'elle est en position basse extrême.

Dans un autre mode de réalisation de l'invention, les moyens précités sont formés d'un insert annulaire rigide servant à la fois à fixer le bord périphérique de la membrane sur l'enveloppe et à réduire le volume mort dans la chambre supérieure notamment au-dessus de cette zone de fixation.

Dans cet autre mode de réalisation, l'insert annulaire rigide reconstitue à l'intérieur de la chambre supérieure pneumatique la courbure opposée à celle du sommet de la sphère du premier mode de réalisation.

La chambre supérieure est plus particulièrement destinée à contenir un gaz sous pression et elle est fermée par un élément inamovible tel qu'une bille soudée. En effet, la membrane étant moins sollicitée mécaniquement dans la sphère de l'invention, les risques de fissuration sont considérablement diminués, de sorte qu'il est inutile de prévoir la possibilité de regonfler la sphère.

L'invention sera mieux comprise et d'autres buts, caractéristiques, détails et avantages de celle-ci apparaîtront plus clairement au cours de la description explicative qui va suivre de deux modes de réalisation particuliers actuellement préférés de l'invention, donnés uniquement à titre d'exemples illustratifs et non limitatifs, en référence aux dessins schématiques annexés, dans lesquels :

La figure 1 représente en coupe axiale, sur la demi-vue droite une sphère connue avec la membrane en position haute extrême et sur la demi-vue gauche un premier mode de réalisation de la sphère de l'invention avec la membrane en une position haute intermédiaire.

La figure 2 représente en coupe axiale, sur la demi-vue gauche le premier mode de réalisation de la sphère de l'invention avec la membrane en position haute intermédiaire, et sur la demi-vue droite un autre mode de réalisation de la sphère de l'invention avec la membrane en position basse extrême.

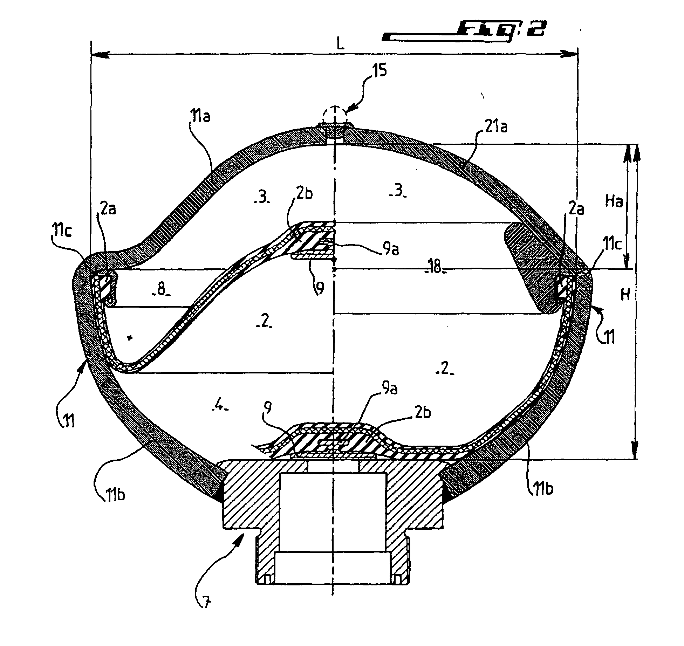

Suivant l'exemple de réalisation représenté sur les demi-vues gauches des figures 1 et 2, la sphère de l'invention comporte, selon un premier mode de réalisation, une enveloppe externe, par exemple métallique, ayant une forme générale sensiblement aplatie 11.

L'enveloppe 11 comporte une partie supérieure 11a et une partie inférieure 11b séparées par une zone de jonction 11c.

La partie inférieure 11b présente une forme sensiblement hémisphérique tronquée à sa base pour la fixation de l'embout de raccordement 7.

On remarquera que la partie inférieure 11b n'est pas un hémisphère complet car le plan P localement tangent à la surface interne de la partie inférieure 11b à partir de la zone de jonction 11c forme un angle α avec l'axe A de la sphère de l'invention.

La partie supérieure 11a présente une forme non-convexe car elle a en son centre une courbure orientée vers l'intérieur de la sphère et au voisinage de la zone de jonction 11c une courbure opposée orientée vers l'extérieur de la sphère.

On voit clairement sur les demi-vues gauches des figures 1 et 2 que la partie supérieure 11a de l'enveloppe 11 forme en section axiale une ligne en S qui vient combler le volume mort situé notamment au-dessus de la collerette de fixation 8.

Etant donné que la membrane 2 est soumise ici à des contraintes et à un cloquage moindres, elle ne risque pas de se fissurer et donc de perdre son étanchéité, de sorte que la vis de gonflage précitée 5 peut être supprimée et dans ce cas le sommet de la sphère est obturé par un élément inamovible par exemple une bille soudée 15.

Les membranes utilisées sont généralement du type multicouches, par exemple avec deux couches en caoutchouc entourant une couche en alcool polyvinylique.

On a représenté sur la demi-vue droite de la figure 2 un autre mode de réalisation de la sphère de l'invention.

Ce deuxième mode de réalisation diffère du premier mode essentiellement par la partie supérieure 21a de l'enveloppe 11.

En effet, la partie supérieure 21a présente ici une forme convexe dont la courbure est orientée vers l'intérieur de la sphère.

La collerette circulaire 8 est remplacée ici par un insert annulaire rigide 18, par exemple en plastique.

L'insert annulaire 18 est conformé de manière à retenir le bord périphérique 2a de la membrane 2 contre la surface interne de l'enveloppe 11 et comble le volume mort situé notamment au-dessus du bord périphérique 2a.

Ce deuxième mode de réalisation est particulièrement avantageaux en fabrication car un seul outil d'emboutissage est nécessaire pour fabriquer l'enveloppe, les différentes formes souhaitées étant obtenues en changeant simplement la taille de l'insert.

On a référencé par les lettres L, H et Ha, respectivement le diamètre interne de la sphère au niveau de la zone de jonction, la hauteur interne de la sphère et la hauteur interne de sa partie supérieure.

On voit clairement sur les figures 1 et 2 que la membrane 2 présente une épaisseur moindre dans sa partie intermédiaire entre sa zone centrale 2b et son bord périphérique 2a.

Par souci de simplicité, on a qualifié les différentes parties de la sphère de « supérieure » ou « inférieure », mais la sphère peut être disposée d'une manière quelconque, par exemple inclinée, horizontale ou tête en bas.

Bien que l'invention ait été décrite en liaison avec deux modes de réalisation particuliers, elle comprend tous les équivalents techniques des moyens décrits et leurs combinaisons si celles-ci entrent dans le cadre des revendications qui suivent.

## Revendications

1. Sphère, notamment pneumatique, comprenant une enveloppe rigide (11) présentant des parties supérieure (11a, 21a) et inférieure (11b), une forme générale sensiblement hémisphérique dans sa partie inférieure et aplatie dans sa partie supérieure, et une membrane souple déformable (2) disposée à l'intérieur de cette enveloppe de manière à définir une chambre supérieure (3), isolée, et une chambre inférieure (4), communiquante, la membrane étant fixée au niveau de la zone de jonction (11c) entre les parties supérieure et inférieure et étant déplaçable entre une position basse extrême et une position haute extrême correspondant respectivement à un volume maximal et à un volume minimal de la chambre supérieure, **caractérisée en ce que** ladite enveloppe (11) comporte des moyens pour que la surface interne de la partie supérieure (11a, 21a) de l'enveloppe présente sur toute sa longueur une courbure qui coïncide sensiblement avec celle de la membrane en position haute extrême, pour réduire au maximum le volume mort et éviter ainsi le cloquage de la membrane et en minimiser les déformations.

2. Sphère selon la revendication 1, **caractérisée par** le rapport entre le diamèmtre interne (L) de l'enveloppe au niveau de la zone de jonction de ses parties supérieure et inférieure et la hauteur interne (H) de ladite enveloppe, lequel rapport est compris entre 1,35 et 1,65, et égal de préférence à environ 1,5.

3. Sphère selon la revendication 1 ou 2, **caractérisée par** le rapport entre la hauteur interne (H) de l'enveloppe et la hauteur interne (Ha) de sa partie supérieure (11a, 21a) lequel rapport est compris entre 2,25 et 2,75, et égal de préférence à environ 2,5.

4. Sphère selon l'une des revendications précédentes, **caractérisée en ce que** les moyens précités sont constitués par la paroi même de la partie supérieure.

5. Sphère selon l'une des revendications 1 à 3, **caractérisée en ce que** la partie supérieure (21a) de l'enveloppe (11) est en forme générale de calotte sphérique et les moyens précités sont formés d'un insert annulaire rigide (18) servant à la fois à fixer le bord périphérique (2a) de la membrane sur l'enveloppe et à réduire le volume mort dans sa chambre supérieure (3).

6. Sphère selon l'une des revendications précédentes, **caractérisée en ce que** la longueur développée de la membrane (2) est égale ou légèrement supérieure à celle de la surface interne de la partie inférieure (11b) de l'enveloppe (11).

7. Sphère selon l'une des revendications précédentes, **caractérisée en ce que** le plan (P) tangent à la surface interne de la partie inférieure (11b) de l'enveloppe (11) au voisinage de sa zone de jonction (11c) avec la partie supérieure (11a, 21a) forme un angle (α) avec l'axe (A) de la sphère compris entre 5 et 8°, et égal de préférence à environ 7°.

8. Sphère selon l'une des revendications précédentes, **caractérisée en ce que** la chambre supérieure (3) contient un gaz sous pression et est obturée par un élément inamovible tel qu'une bille soudée (15).

9. Sphère selon l'une des revendications précédentes, **caractérisée en ce que** la membrane (2) présente une épaisseur moindre dans sa partie intermédiaire entre sa zone centrale (2b) et son bord périphérique (2a).

## Patentansprüche

1. Kugel, insbesondere eine pneumatische Kugel, mit einer steifen Ummantelung (11), die obere (11a, 21a) und untere (11b) Teile, eine allgemeine deutliche halbkugelförmige Form in ihrem unteren Teil und eine abgeflachte Form in ihrem oberen Teil und eine elastische verformbare Membran (2) aufweist, die im Innern dieser Ummantelung derart angeordnet ist, dass sie eine obere isolierte Kammer (3) und eine untere zusammenhängende Kammer (4) definiert, wobei die Membran auf Höhe der Verbindungszone (11c) zwischen den oberen und unteren Teilen befestigt ist und dabei zwischen einer niedrigen äußeren Position und einer hohen äußeren Position verschiebbar ist, die jeweils einem maximalen Volumen und einem minimalen Volumen der oberen Kammer entsprechen, **dadurch gekennzeichnet, dass** besagte Ummantelung (11) Mittel umfasst, damit die Innenfläche des oberen Teils (11a, 21a) der Ummantelung auf ihrer ganzen Länge eine Krümmung aufweist, die deutlich mit der der Membran in hoher äußerer Position zusammenfällt, um das tote Volumen so weit wie möglich zu reduzieren und somit die Blasenbildung der Membran zu verhindern und die Verformungen zu minimieren.

2. Kugel gemäß Anspruch 1, **gekennzeichnet durch** das Verhältnis zwischen dem Innendurchmesser (L) der Ummantelung auf Höhe der Verbindungszone ihrer oberen und unteren Teile und der inneren Höhe (H) besagter Ummantelung, wobei dieses Verhältnis zwischen 1,35 und 1,65 inbegriffen ist und bevorzugt gleich 1,5 ist.

3. Kugel gemäß Anspruch 1 oder 2, **gekennzeichnet durch** das Verhältnis zwischen der Innenhöhe (H) der Ummantelung und der Innenhöhe (Ha) ihres oberen Teils.

4. Kugel gemäß einem der vorgenannten Ansprüche, **dadurch gekennzeichnet, dass** die vorgenannten Mittel durch die Wand selbst des oberen Teils gebildet werden.

5. Kugel gemäß Anspruch 1 bis 3, **dadurch gekennzeichnet, dass** der obere Teil (21a) der Ummantelung (11) eine allgemeine sphärische Kappenform hat und die vorgenannten Mittel durch einen ringförmigen steifen Einsatz (18) gebildet werden, der gleichzeitig zur Befestigung des peripherischen Randes (2a) der Membran auf der Ummantelung und zur Reduktion des toten Volumens in ihrer oberen Kammer (3) dient.

6. Kugel gemäß einem der vorgenannten Ansprüche, **dadurch gekennzeichnet, dass** die entwickelte Länge der Membran (2) gleich oder leicht größer ist als die der Innenfläche der unteren Wand (11b) der Ummantelung (11).

7. Kugel gemäß einem der vorgenannten Ansprüche, **dadurch gekennzeichnet, dass** die an der Innenfläche des unteren Teils (11b) der Ummantelung (11) in der Nähe ihrer Verbindungszone (11c) mit dem oberen Teil (11a, 21a) tangierende Ebene (P) mit der Achse (A) der Kugel einen Winkel (α) bildet, der zwischen 5 und 8° inbegriffen ist und bevorzugt ungefähr gleich 7° ist.

8. Kugel gemäß einem der vorgenannten Ansprüche, **dadurch gekennzeichnet, dass** die obere Kammer (3) ein unter Druck stehendes Gas enthält und durch ein nicht abnehmbares Element, wie zum Beispiel einer angeschweißten Kugel (15), verschlossen ist.

9. Kugel gemäß einem der vorgenannten Ansprüche, **dadurch gekennzeichnet, dass** die Membran (2) in ihrem mittleren Teil zwischen dem zentralen Bereich (2b) und ihrem peripherischen Rand (2a) eine geringere Stärke aufweist.

## Claims

1. Sphere, especially pneumatic, including a rigid casing (11) having upper (11a, 21a) and lower (11b) portions, an approximately hemispherical general shape and flattened in its upper portion, and a ductile flexible membrane (2) placed inside this casing so as to define a separate upper chamber (3) and a communicating lower chamber (4), the membrane being fixed at the level of the joining zone (11c) between the upper and lower portions and able to be moved between an extreme bottom position and an extreme top position corresponding respectively to a maximum volume and over its entire length to a minimum volume of the upper chamber, **characterised in that** said casing (11) comprises means so that the internal surface of the upper portion (11a, 21a) of the casing has over its entire length a curve which approximately coincides with that of the membrane in the top extreme position so as to reduce to maximum the dead volume and thus avoid the blocking of the membrane and minimise deformations of the latter.

2. Sphere according to claim 1, **characterised by** the ratio between the internal diameter (L) of the casing at the level of the joining zone of its upper and lower portions and the internal height (H) of said casing, said ratio being between 1.35 and 1.65 and preferably equal to about 1.5.

3. Sphere according to claim 1 or 2, **characterised by** the ratio between the internal height (H) of the casing and the internal height (Ha) of its upper portion (11az, 21a), said ratio being between 2.25 and 2.75 and preferably about 2.5.

4. Sphere according to one of the preceding claims, **characterised in that** said means are constituted by the actual wall of the upper portion.

5. Sphere according to one of claims 1 to 3, **characterised in that** the upper portion (21a) of the casing (11) has the general shape of a spherical cap and said means are formed of a rigid annular insert (18) used for fixing the peripheral edge (2a) of the membrane on the casing and for reducing the dead volume in its upper chamber (3).

6. Sphere according to one of the preceding claims, **characterised in that** the open-ended length of the membrane (2) is equal to or slightly larger than that of the internal surface of the lower portion (11b) of the casing (11).

7. Sphere according to one of the preceding claims, **characterised in that** the plane (P) tangent to the internal surface of the lower portion (11b) of the casing (11) close to its joining zone (11c) with the upper portion (11a, 21a) forms an angle (α) with the axis (A) of the sphere between 5 and 8° and preferably equal to about 7°.

8. Sphere according to one of preceding claims, **characterised in that** the upper chamber (3) contains a pressure gas and is sealed off by a fixed element, such as a welded ball (15).

9. Sphere according to one of the preceding claims, **characterised in that** the thickness of the intermediate portion of the membrane (2) is reduced between its central zone (2b) and its peripheral edge (2a).
